# EUROPÄISCHE PATENTANMELDUNG

(11) **EP 2 295 757 A1**
(43) Veröffentlichungstag der Anmeldung: **16.03.2011**
(21) Anmeldenummer: 10006317.1
(22) Anmeldetag: 18.06.2010
(51) Int. Cl.: F01P 7/14, F16K 11/085, F16K 31/04

(54) **Steuervorrichtung für den Kühlmittelfluss im Kreislauf einer Brennkraftmaschine**

(30) Priorität: 30.07.2009 DE 102009035349
(71) Anmelder: Gustav Wahler GmbH u. Co.KG, 73730 Esslingen (DE)
(72) Erfinder: Weiß, Rainer, 72351 Geislingen-Erlaheim (DE); Selch, Andreas, 73240 Wendlingen (DE); Bareis, Bernd, Dr., 73527 Utzstetten (DE); Kasper, Klaus, 77704 Oberkirch (DE)
(74) Vertreter: Kratzsch, Volkhard

(57) **Zusammenfassung**

Die Erfindung betrifft eine Steuervorrichtung (10) für den Kühlmittelfluss im Kühlreislauf einer Brennkraftmaschine, mit einem Gehäuse (11), in dem ein Steuerelement (21) drehbar angeordnet ist, mit zumindest einer Zulauföffnung (16) zum Gehäuse (11), mit zumindest zwei Ablauföffnungen (17 bis 19) in einer Umfangswand (20) des Gehäuses (11) innerhalb einer gemeinsamen Ebene. Das Steuerelement (21) dient zur Steuerung der Abströmung durch die mindestens zwei Ablauföffnungen (17 bis 19) und hat eine der Anzahl der Ablauföffnungen (17 bis 19) entsprechende Anzahl von Öffnungen (22 bis 24) mit Sperrwänden (25 bis 27) dazwischen, wobei in einer ersten Schaltstellung des Steuerelements (21) alle Ablauföffnungen (17 bis 19) abgesperrt sind, in einer zweiten eine (19) der Ablauföffnungen (17 bis 19) geöffnet ist, in einer dritten wenigstens zwei Ablauföffnungen (18, 19) wenigstens teilweise geöffnet sind und in einer vierten Schaltstellung alle Ablauföffnungen (17 bis 19) geöffnet sind. Die Ablauföffnungen (17 bis 19) in der Umfangswand (20) des Gehäuses (11) sind langlochartige Fenster (28 bis 30)mit axialer Erstreckung und von langlochartigen Dichtkörpern (31 bis 33) mit entsprechender Kontur gesäumt, die am Steuerelement (21) anliegen. Die Öffnungen (22 bis 24) im Steuerelement (21) sind axial den Ablauföffnungen (17 bis 19) und den Dichtkörpern (31 bis 33) etwa entsprechend bemessen.

## Beschreibung

Die Erfindung bezieht sich auf eine Steuervorrichtung für den Kühlmittelfluss im Kühlkreislauf einer Brennkraftmaschine, insbesondere für Fahrzeuge, der im Oberbegriff des Anspruchs 1 genannten Art.

Es ist eine Steuervorrichtung für den Kühlkreislauf einer Brennkraftmaschine bekannt (DE 101 01 826 B4), bei der das Gehäuse wenigstens zwei Ablauföffnungen und ferner wenigstens zwei Zulauföffnungen aufweist, wobei letztere in einer anderen Ebene als die mindestens zwei Ablauföffnungen liegen. Das zur Steuerung der Abströmung dienende Steuerelement weist am Umfang zwei Öffnungen auf, die durch das Steuerelement hindurch miteinander verbunden sind und in Umfangsrichtung von zwei Sperrwänden voneinander getrennt sind. Die beiden Zulauföffnungen können in die Umfangswand des Gehäuses münden. Das Steuerelement in Form eines Drehschiebers ist mit seinen zwei Öffnungen zwischen den beiden Ablauföffnungen so drehbar, dass entweder beide Ablauföffnungen gesperrt oder die eine oder die andere Ablauföffnung freigegeben oder beide Ablauföffnungen zumindest zum Teil freigegeben sind. Die Steuervorrichtung ist aufwendig im Aufbau und hat ein großes Bauvolumen mit einem entsprechend großen Platzbedarf.

Der Erfindung liegt die Aufgabe zu Grunde, eine Steuervorrichtung der eingangs genannten Art zu schaffen, die eine kompakte Bauform und damit einen reduzierten Platzbedarf hat, einfach im Aufbau ist und die Voraussetzungen dafür schafft, je nach Schaltstellung des Steuerelements einen großen Mediumdurchsatz durch die Ablauföffnungen des Gehäuses zu ermöglichen.

Die Aufgabe ist bei einer Steuervorrichtung der eingangs genannten Art gemäß der Erfindung durch die Merkmale im Anspruch 1 gelöst. Diese Steuervorrichtung ist für mindestens zwei Kühlmittelkreisläufe einer Brennkraftmaschine besonders geeignet und weist ein Gehäuse auf, in dem ein Steuerelement drehbar angeordnet ist. Das Gehäuse hat zumindest eine Zulauföffnung und zumindest zwei Ablauföffnungen, die in einer Umfangswand des Gehäuses enthalten sind und in einer gemeinsamen Ebene liegen. Das Steuerelement dient zur Steuerung der Abströmung durch die mindestens zwei Ablauföffnungen und ist mit einer mit der Anzahl der Ablauföffnungen korrespondierenden Anzahl von an seinem Umfang angeordneten, miteinander verbundenen Öffnungen versehen, wobei das Steuerelement an seinem Umfang jeweils zwischen den Öffnungen liegende Sperrwände aufweist mit einer Umfangswinkelanordnung und Umfangswinkelbreite derart, dass hierdurch in einer ersten Schaltstellung des Steuerelements alle Ablauföffnungen komplett abgesperrt werden, in einer zweiten Schaltstellung nur eine der Ablauföffnungen geöffnet ist, in einer dritten Schaltstellung wenigstens zwei Ablauföffnungen wenigstens teilweise geöffnet sind und in einer vierten Schaltstellung alle Ablauföffnungen geöffnet sind. Die Ablauföffnungen in der Umfangswand des Gehäuses sind als langlochartige Fenster mit axialer Längserstreckung ausgebildet. Diese Fenster sind von langlochartig geformten Dichtkörpern mit den Fenstern entsprechender Kontur gesäumt. Die Dichtkörper liegen an der Wandung des Steuerelements an. Die Öffnungen im Steuerelement sind in axialer Richtung den Ablauföffnungen und den Dichtkörpern etwa entsprechend bemessen und sind in Umfangsrichtung zumindest einer Ablauföffnung entsprechend bemessen. Aufgrund dieser Gestaltung etwa langlochartiger Fenster als Ablauföffnungen in der Umfangswand des Gehäuses ergibt sich eine in Radialrichtung reduzierte, relativ schmale Bauweise der Steuervorrichtung. Diese hat einen nur geringen Platzbedarf und benötigt nur ein geringes Einbauvolumen. Ferner ist die Steuervorrichtung einfach im Aufbau und somit kostengünstig. Sie schafft auch die Voraussetzungen für ein reduziertes Gewicht. Von Vorteil ist ferner, dass je nach Schaltstellung des Steuerelements aufgrund der großen Öffnungsquerschnitte der Ablauföffnungen ein großer Mediumdurchsatz erzielbar ist.

Weitere vorteilhafte Erfindungsmerkmale sowie Ausgestaltungen dieser Steuervorrichtung ergeben sich aus den Unteransprüchen.

Von Vorteil kann es sein, wenn in der Umfangswand des Gehäuses drei Ablauföffnungen und in der Wandung des Steuerelements drei zugeordnete Öffnungen vorgesehen sind. Die Ablauföffnungen in der Umfangswand des Gehäuses können in etwa gleichen Umfangswinkelabständen voneinander angeordnet sein. Von Vorteil kann es ferner sein, wenn eine Ablauföffnung in der Umfangswand des Gehäuses eine größere Breite aufweist als die beiden anderen Ablauföffnungen, die in Umfangsrichtung jeweils etwa gleiche Breite haben.

Vorteilhaft kann es ferner sein, wenn das Gehäuse eine untere koaxiale Zulauföffnung aufweist. Das Steuerelement kann als etwa umgekehrt topfförmiger zylindrischer Körper ausgebildet sein, der an einem axialen offenen Ende einen Einlass für das zulaufende Medium hat. Vorteilhaft kann es ferner sein, wenn das Steuerelement eine etwa zylindrische Wandung, eine obere Abschlusswandung und ein axial offenes Ende mit einem Einlass am der Abschlusswandung gegenüberliegenden Ende aufweist.

Bei einer weiteren vorteilhaften Ausführungsform sind die Fenster in der Umfangswand des Gehäuses und die Öffnungen im Steuerelement sowie die Dichtkörper jeweils etwa rechteckförmig ausgebildet.

Die Dichtkörper können aus Kunststoff, insbesondere einem Elastomer, bestehen. Vorteilhaft kann es sein, wenn die Dichtkörper einen umlaufenden metallischen Versteifungsrahmen enthalten. Ein derartiger Versteifungsrahmen kann in vorteilhafter Weise zumindest im Bereich der längeren Ränder der Dichtkörper über diese überstehen und beidseitige metallische Randstege bilden. In vorteilhafter Weise können die Randstege in zugeordnete Nuten des Gehäuses eingreifen, in die die Dichtkörper mit den Randstegen eingeschoben sind.

Die Dichtkörper können auf der Seite, die der an der Wandung des Steuerelements anliegenden Dichtfläche gegenüberliegt, elastische Lippen aufweisen, die überstehen und unter Vorspannung der Dichtkörper in Dichtrichtung an Gehäuseflächen anliegen. Von Vorteil kann es ferner sein, wenn die Dichtkörper auf der Seite, die der an der Wandung des Steuerelements anliegenden Dichtfläche gegenüberliegt, unter der Wirkung des Druckes des über die Zulauföffnung zugeführten Kühlmittels an die Wandung des Steuerelements radial angepresst werden. Dadurch wird allein in Folge des Kühlmitteldrucks in einfacher Weise eine gute Dichtwirkung erzielt.

Das Steuerelement kann an seiner oberen Abschlusswandung abstehende Anschläge aufweisen, die zur Schwenkwinkelbegrenzung an zugeordneten Anschlägen des Gehäuses, z. B. eines Deckels des Gehäuses, anschlagen. Auf diese Weise ist besonders einfach eine Schwenkwinkelbegrenzung verwirklicht. Das Steuerelement kann mittels eines zentralen, zum Einlass weisenden Vorsprunges, der in eine Aufnahme eines gehäuseseitigen Halters eingreift, an diesem Ende radial und axial gelagert sein.

Bei einem anderen vorteilhaften Ausführungsbeispiel ist das Steuerelement z. B. mit seinem einlassseitigen Rand seiner Wandung an umfangsseitigen Stegen des Gehäuses radial geführt und an radial vorstehenden Stegen des Gehäuses axial geführt.

Vorteilhaft kann es ferner sein, wenn das Steuerelement am oberen Endbereich mittels eines deckelseitigen oder gehäuseseitigen, axial vorstehenden Ringbundes axial gehalten ist, an dem das Steuerelement mit der oberen Abschlusswand axial anstößt.

Eine weitere vorteilhafte Ausführungsform sieht vor, dass das Steuerelement eine damit einstückige, über dessen obere Abschlusswand überstehende Welle aufweist, über die das Steuerelement von einer aufgesetzten Antriebseinheit drehangetrieben ist. Die Welle kann z. B. zwei in axialer Richtung beabstandete zylindrische Führungsabschnitte für eine aufgesteckte Antriebswelle der Antriebseinheit aufweisen.

Vorteilhaft kann es ferner sein, wenn die Welle axial zwischen den Führungsabschnitten einen Mitnehmerabschnitt, z. B. einen Keilwellenabschnitt mit etwa achsparallelen Keilen, aufweist, an dem zum Drehantrieb die aufgesteckte Antriebswelle der Antriebseinheit formschlüssig eingreift.

Die Anordnung kann mit Vorteil so getroffen sein, dass das Gehäuse am der axialen Zulauföffnung gegenüberliegenden Ende einen separaten Deckel oder einen mit dem Gehäuse einstückigen Deckel aufweist. Durch diesen Deckel hindurch kann die Welle nach außen ragen und mittels eines Dichtungselements abgedichtet sein. Vorteilhaft kann es sein, wenn der Deckel einen eingetieften Ringsitz enthält, in den die aufgesetzte Antriebseinheit mit einem Vorsprung ihres Gehäuses eingreift und zentriert ist.

Vorteilhaft kann es ferner sein, wenn die Antriebseinheit als Komplettbaustein ausgebildet ist, der unter Kupplung der Antriebswelle mit der Welle lösbar an das Gehäuse ansetzbar ist. Dabei kann die Antriebseinheit mit Vorteil einen elektrischen Antriebsmotor, z. B. einen Schrittmotor oder einen Gleichstrommotor, vorzugsweise mit nachgeschaltetem Getriebe, enthalten.

Das Gehäuse und/oder das Steuerelement können aus Kunststoff bestehen.

Das Gehäuse kann je Ablauföffnung z. B. einen davon abgehenden, mit dem Gehäuse einstückigen Stutzen aufweisen. Vorteilhaft kann es sein, wenn das Gehäuse etwa zylindrisch ist. Zumindest ein Stutzen kann in Bezug auf das Gehäuse etwa tangential verlaufen. Stattdessen oder zusätzlich dazu kann zumindest ein Stutzen in Bezug auf das Gehäuse zumindest annähernd parallel zur Längsmittelachse des Gehäuses oder unter einem spitzen Winkel geneigt dazu, gegensinnig zum Zulauf, verlaufen. Als Zulauföffnung kann das Gehäuse z. B. einen nach unten abstrebenden zentralen Rohrstutzen aufweisen.

Weitere Einzelheiten und Vorteile der Erfindung ergeben sich aus der nachfolgenden Beschreibung.

Alle in der vorstehenden und folgenden Beschreibung erwähnten Merkmale sowie auch die allein aus den Zeichnungen entnehmbaren Merkmale sind weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische perspektivische Ansicht einer Steuervorrichtung für den Kühlmittelfluss im Kühlkreislauf einer Brennkraftmaschine, gemäß einem ersten Ausführungsbeispiel,
- Fig. 2: eine perspektivische Explosionsdarstellung der Steuervorrichtung in Fig. 1,
- Fig. 3: eine schematische Draufsicht der Steuervorrichtung bei abgehobenem Deckel und abgehobener Antriebseinheit,
- Fig. 4: eine schematische Ansicht auf die Unterseite eines Deckels,
- Fig. 5: einen schematischen senkrechten Schnitt mit teilweiser Seitenansicht der Steuervorrichtung in Fig. 1,
- Fig. 6: eine schematische Draufsicht eines Teils des Steuerelements der Steuervorrichtung,
- Fig. 7: einen anderen schematischen senkrechten Schnitt mit teilweiser Seitenansicht der Steuervorrichtung in Fig. 1,
- Fig. 8: einen schematischen horizontalen Schnitt der Steuervorrichtung in Fig. 1, wobei sich das Steuerelement in einer ersten Schaltstellung befindet,
- Fig. 9: einen schematischen Schnitt der Steuervorrichtung analog demjenigen in Fig. 8, wobei sich das Steuerelement in einer zweiten Schaltstellung befindet,
- Fig.10: einen schematischen Schnitt der Steuervorrichtung analog demjenigen in Fig. 8, wobei sich das Steuerelement in einer dritten Schaltstellung befindet,
- Fig.11: einen schematischen Schnitt der Steuervorrichtung analog demjenigen in Fig. 8, wobei sich das Steuerelement in einer vierten Schaltstellung befindet,
- Fig.12: einen schematischen senkrechten Schnitt einer Steuervorrichtung gemäß einem zweiten Ausführungsbeispiel,
- Fig.13: einen schematischen Schnitt des oberen Teils einer Steuervorrichtung gemäß einem dritten Ausführungsbeispiel.

In den Zeichnungen ist eine Steuervorrichtung 10 gezeigt, die für den Kühlmittelfluss im Kühlkreislauf einer nicht gezeigten Brennkraftmaschine, insbesondere für Fahrzeuge, ausgebildet ist. Dabei ist die Steuervorrichtung 10 zur Steuerung von wenigstens zwei nicht gezeigten Kühlkreisläufen gestaltet, von denen ein Kühlkreislauf als üblicher, der Kühlung der Brennkraftmaschine dienender Kreislauf ausgebildet ist und ein mindestens zweiter Kühlkreislauf z.B. der Klimatisierung/Heizung z.B. des Fahrgastraumes eines Fahrzeuges dient.

Die Steuervorrichtung 10 weist ein einstückiges Gehäuse 11 insbesondere aus Kunststoff auf, das eine etwa zylindrische Umfangswand 20 und im Bereich eines sich z.B. etwa schwach kegelstumpfförmig verjüngenden Bodens 9 eine bodenseitige untere koaxiale Zulauföffnung 16 enthält. An die axiale Zulauföffnung 16 schließt sich einstückig ein nach unten abstrebender zentraler Rohrstutzen 12 an, der diese Zulauföffnung 16 bildet. Das Gehäuse 11 weist am der axialen Zulauföffnung 16 gegenüberliegenden Ende einen das Gehäuseinnere abschließenden Deckel 43 auf. Dieser Deckel 43 ist entweder ein separates Bauteil, das an der Oberseite des Gehäuses 11 unter Zwischenfügung einer Dichtung 63, z.B. in Form eines O-Ringes, lösbar befestigt ist, oder der Deckel 43 ist mit dem Gehäuse 11, insbesondere dessen Umfangswand 20, einstückig. In diesem Fall verläuft die zylindrische Umfangswand des Gehäuses 11 auch im Bereich des Bodens 9 durchgehend zylindrisch, damit von dieser Bodenseite her ein Steuerelement 21 eingebaut werden kann, das im Inneren des Gehäuses 11 drehbar angeordnet ist. Das Steuerelement 21 ist als etwa umgekehrt topfförmiger zylindrischer Körper ausgebildet, der eine etwa zylindrische Wandung 34, eine damit einstückige obere Abschlusswandung 40 und dieser gegenüberliegend ein axial offenes Ende mit einem dortigen Einlass 35 für das über den Rohrstutzen 12 und die Zulauföffnung 16 von unten her in das Innere des Steuerelements 21 gelangende Medium aufweist. Das Steuerelement 21 besteht z.B. aus Kunststoff, insbesondere einem Kunststoffformteil.

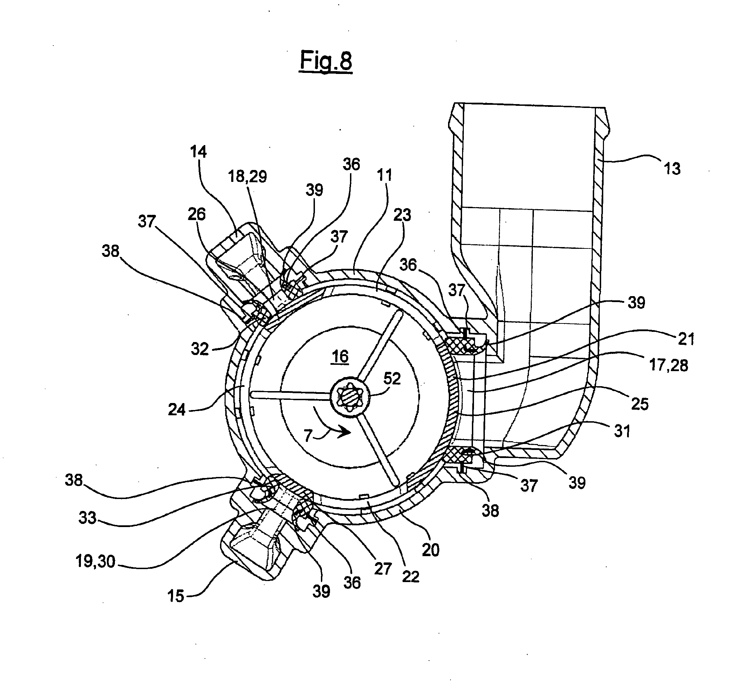

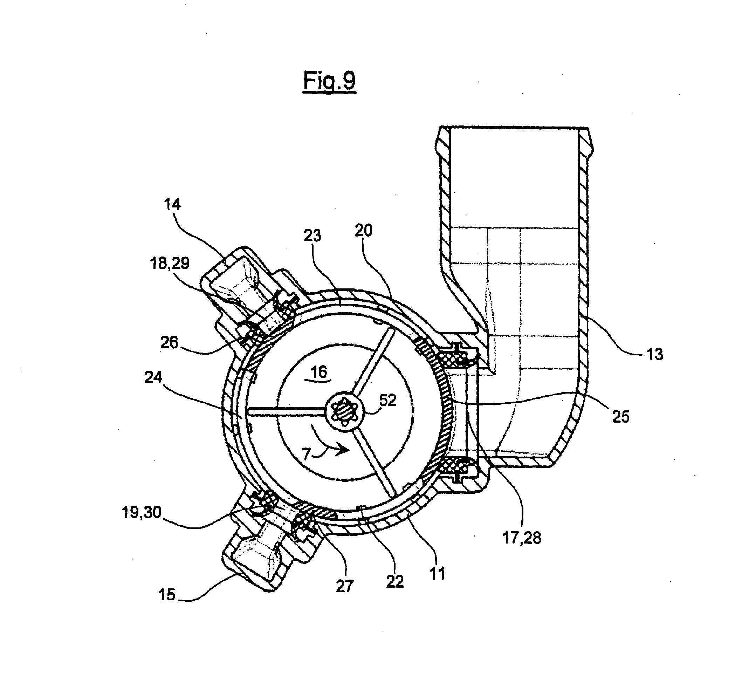

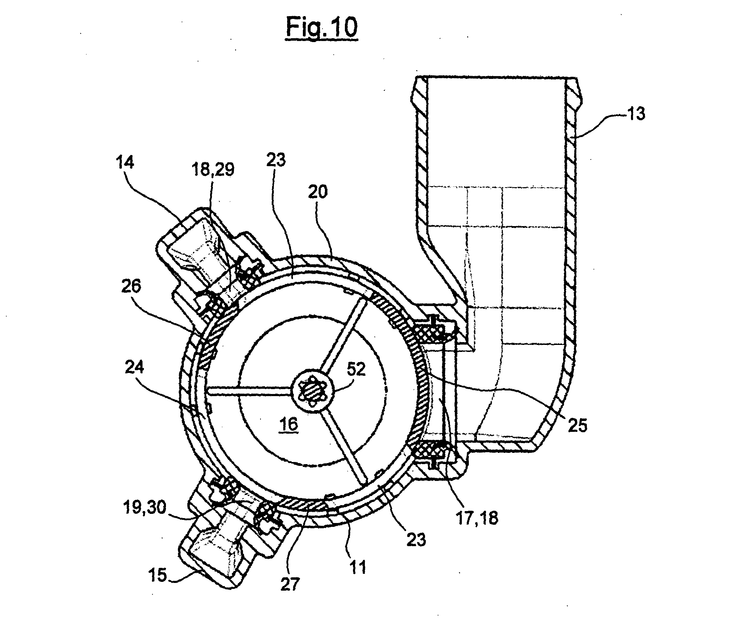

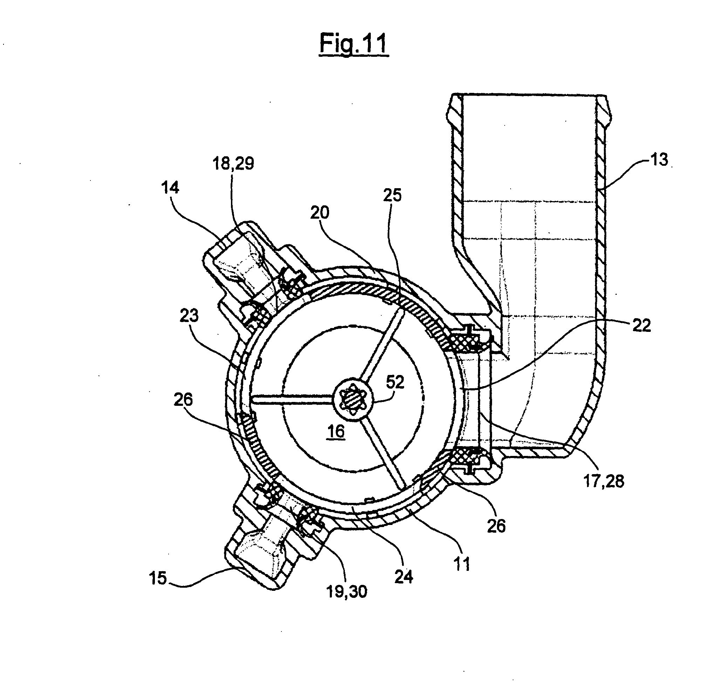

Die Steuervorrichtung 10 weist in der Umfangswand 20 mindestens zwei Ablauföffnungen auf, wobei beim gezeigten Ausführungsbeispiel drei Ablauföffnungen 17 bis 19 vorgesehen sind. Diese Ablauföffnungen 17 bis 19 liegen in einer gemeinsamen radialen Ebene. Das Steuerelement 21 im Inneren des Gehäuses 11 dient zur Steuerung der Abströmung des Mediums durch die Ablauföffnungen 17 bis 19 und ist hierzu mit einer der Anzahl der Ablauföffnungen 17 bis 19 korrespondierenden Anzahl von an seinem Umfang angeordneten, miteinander über das Innere des Steuerelements 21 verbundenen Öffnungen 22 bis 24 versehen. Das Steuerelement 21 weist an seinem Umfang jeweils zwischen den Öffnungen 22 bis 24 liegende Sperrwände 25, 26 und 27 auf mit einer Umfangswinkelanordnung und Umfangswinkelbreite derart, dass hierdurch in einer ersten Schaltstellung des Steuerelements 21, die in Fig. 8 gezeigt ist, alle Ablauföffnungen 17, 18 und 19 komplett abgesperrt sind, in einer zweiten Schaltstellung gemäß Fig. 9 dagegen nur eine Ablauföffnung 19 zumindest teilweise geöffnet ist, während die beiden anderen Ablauföffnungen 17 und 18 verschlossen sind, in einer dritten Schaltstellung gemäß Fig. 10 zumindest zwei Ablauföffnungen 19 und 18 zumindest teilweise geöffnet sind, während die dritte Ablauföffnung 17 nach wie vor verschlossen ist, und in einer vierten Schaltstellung gemäß Fig. 11 sämtliche Ablauföffnungen 19, 18 und 17 geöffnet sind. Das Steuerelement 21 wird zum Durchfahren dieser vier erläuterten Schaltstellungen um seine Längsmittelachse 8, ausgehend von der Schaltstellung gemäß Fig. 8, gemäß Pfeil 7 im Gegenuhrzeigersinn bis hin zur Position gemäß Fig. 11 gedreht. Die Endstellung des Steuerelements 21 bei Erreichen der vierten Schaltstellung gemäß Fig. 11 wird durch später beschriebene Anschläge begrenzt. Auf dem Weg zwischen der Position gemäß Fig. 8 mit Absperrung sämtlicher Ablauföffnungen 17 bis 19 bis hin zur vierten Schaltstellung gemäß Fig. 11 durchläuft das Steuerelement 21 einen Drehwinkel in der Größenordnung z.B. von etwa 80° bis 90°, vorzugsweise z.B. 85°.

Die Ablauföffnungen 17 bis 19 in der Umfangswand 20 des Gehäuses 11 sind jeweils als langlochartige Fenster 28 bis 30 mit axialer Längserstreckung ausgebildet. Die Längserstreckung dieser Fenster 28 bis 30 verläuft etwa parallel zur Längsmittelachse 8.

Die Öffnungen 22 bis 24 in der Wandung 34 des Steuerelements 21 sind in axialer Richtung, parallel zur Längsmittelachse 8, den Ablauföffnungen 17 bis 19 in der Umfangswand 20 entsprechend bemessen und in Umfangsrichtung, wie aus Fig. 8 bis Fig. 11 ersichtlich ist, unterschiedlich breit bemessen, wobei zumindest eine Öffnung 22 in Umfangsrichtung etwa so breit bemessen ist wie zumindest eine Ablauföffnung, insbesondere die Ablauföffnung 17 (Fig. 11). Man erkennt, dass z.B. die Öffnung 23 des Steuerelements 21 in Umfangsrichtung schmaler bemessen ist als die dritte Öffnung 24 jedoch wie auch die Öffnung 24 breiter als die erste Öffnung 22. Diese Bemessung ist dadurch erreicht, dass z.B. die eine Sperrwand 25 in Umfangsrichtung breiter bemessen ist als die nächste Sperrwand 26, die ihrerseits breiter als die nächstfolgende Sperrwand 27 bemessen ist.

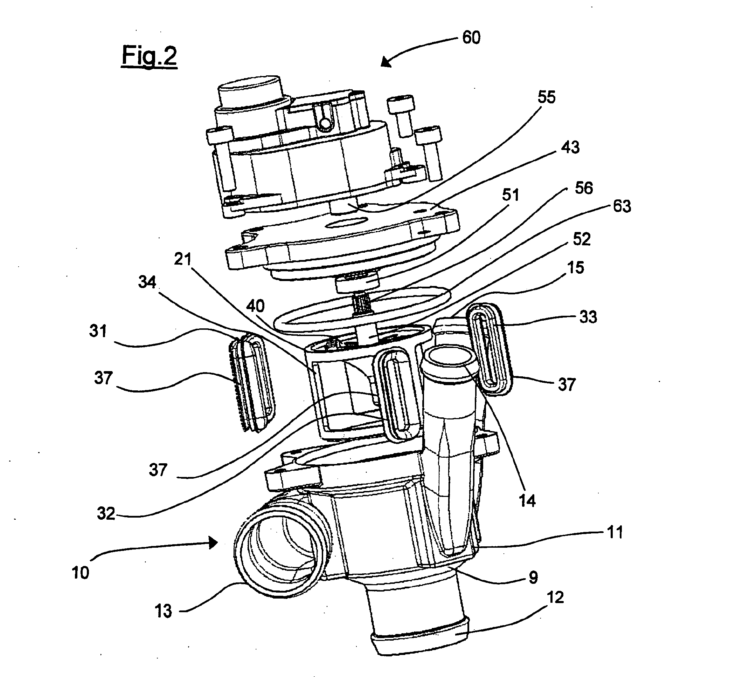

Zwischen der Umfangswand 20 des Gehäuses 11 und der Wandung 34 des Steuerelements 21 sind im Bereich der Ablauföffnungen 17 bis 19 Dichtkörper 31 bis 33 angeordnet, die in Anpassung an die langlochartigen Fenster 28 bis 30 in der Umfangswand 20 ebenfalls langlochartig geformt sind, wie insbesondere Fig. 2 zeigt, und eine den Fenstern 28 bis 30 entsprechende Kontur aufweisen und diese Fenster 28 bis 30 säumen. Die Dichtkörper 31 bis 33 liegen an der Wandung 34 des Steuerelements 21 dichtend an.

Wie beim gezeigten Ausführungsbeispiel erkennbar ist, sind in der Umfangswand 20 des Gehäuses 11 insgesamt drei Ablauföffnungen 17 bis 19 und in der Wandung 34 des Steuerelements 21 in entsprechender Zuordnung ebenfalls insgesamt drei Öffnungen 22 bis 24 vorgesehen. Die Ablauföffnungen 17 bis 19 in der Umfangswand 20 sind in etwa gleichen Umfangswinkelabständen voneinander angeordnet. Eine Ablauföffnung 17 in der Umfangswand 20 des Gehäuses 11 hat eine größere Breite, in Umfangsrichtung betrachtet, als die beiden anderen Ablauföffnungen 18 und 19, die in Umfangsrichtung jeweils etwa gleiche Breite haben. Die etwa langlochartigen Fenster 28 bis 30 in der Umfangswand 20 des Gehäuses 11 und die Dichtkörper 31 bis 33 sowie auch die Öffnungen 22 bis 24 im Steuerelement sind etwa rechteckförmig ausgebildet.

Die Dichtkörper 31 bis 33 enthalten einen umlaufenden metallischen Versteifungsrahmen 36, der zumindest im Bereich der längeren Ränder der Dichtkörper 31 bis 33 über diese übersteht und beidseitige metallische Randstege 37 bildet. Der metallische Versteifungsrahmen 36 ist umspritzt vom Dichtungsmaterial der Dichtkörper 31 bis 33, das aus Kunststoff, insbesondere einem Elastomer, besteht. Die Randstege 37 der Dichtkörper 31 bis 33 greifen in zugeordnete Nuten 38 des Gehäuses 11 ein, in die die Dichtkörper 31 bis 33 mit den Randstegen 37 eingeschoben sind. Die Dichtkörper 31 bis 33 weisen auf der Seite, die der an der Wandung 34 des Steuerelements 21 anliegenden Dichtfläche gegenüberliegt, elastische Lippen 39 auf, die in radialer Richtung überstehen und unter Vorspannung der Dichtkörper 31 bis 33 in etwa radialer Dichtrichtung an entsprechenden Gehäuseflächen im Bereich der Ablauföffnungen 17, 18 und 19 anliegen, wie dies z.B. aus Fig. 8 bis 11 ersichtlich ist. Die Randstege 37 greifen mit gewissem Spiel in radialer Richtung in die Nuten 38 ein. Die Dichtkörper 31 bis 33 werden auf der Seite, die der an der Wandung 34 des Steuerelements 21 anliegenden Dichtfläche gegenüberliegt, insbesondere im Bereich zwischen den Lippen 39 und umgebenden Wandteilen des Gehäuses 11, unter der Wirkung des Druckes des über die Zulauföffnung 16 zugeführten Kühlmittels radial an die Wandung 34 des Steuerelements 21 angepresst. Aufgrund dieser Anpressung und derjenigen der elastischen Lippen 39 ist eine sehr gute Abdichtung zwischen dem Steuerelement 21 und der Umfangswand 20 des Gehäuses 11 im Bereich der Ablauföffnungen 17, 18 und 19 erreicht.

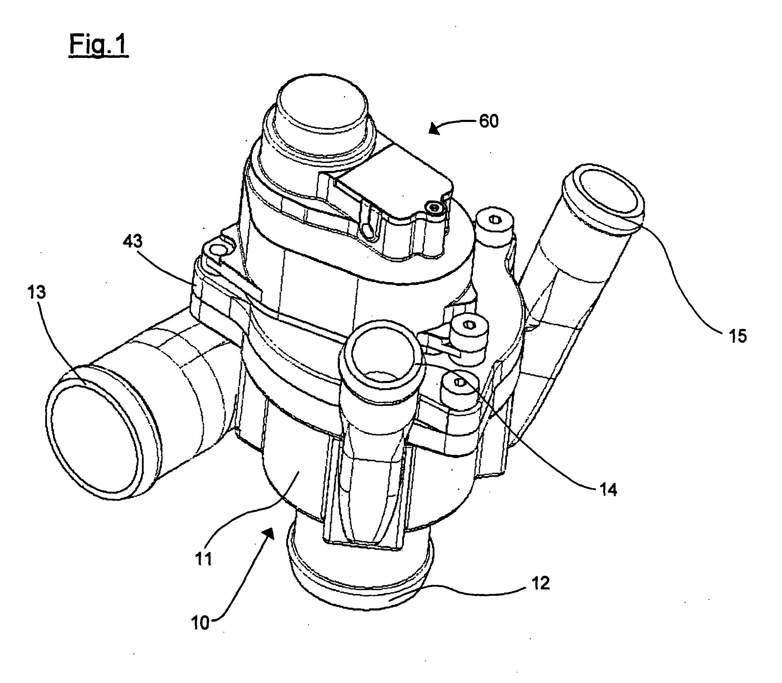

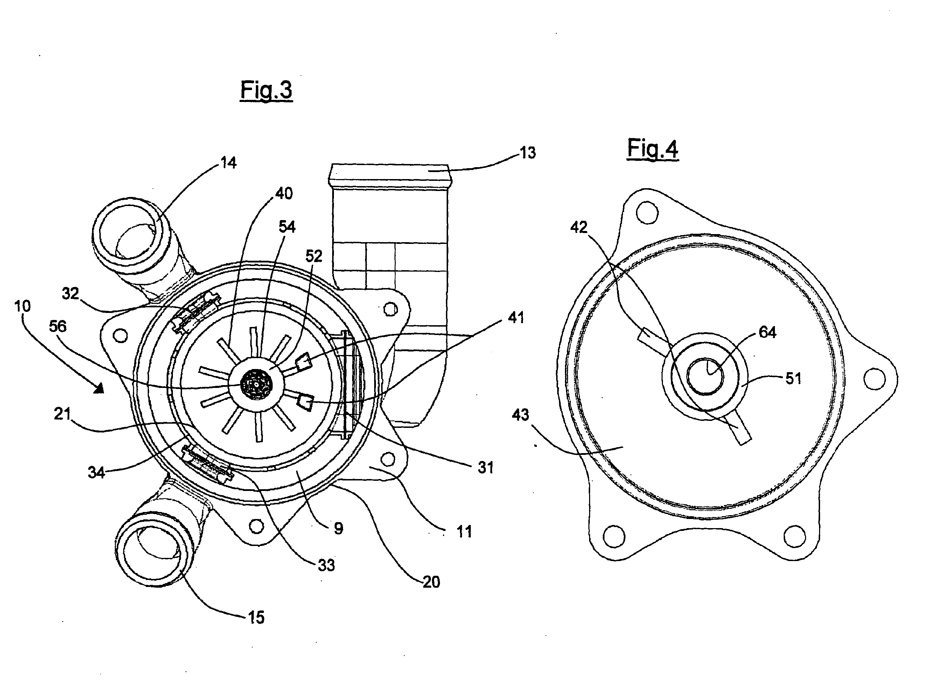

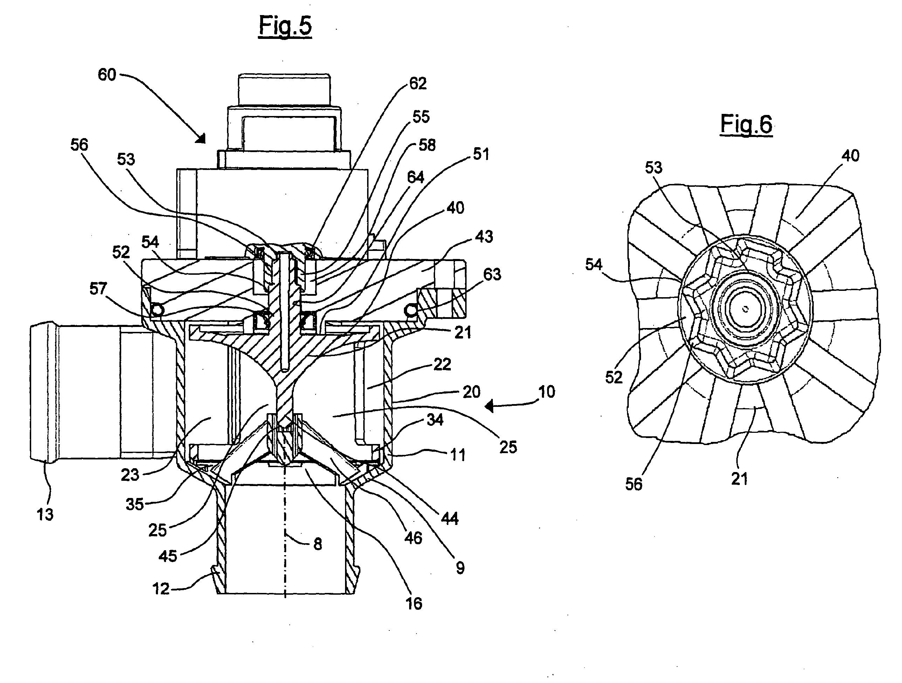

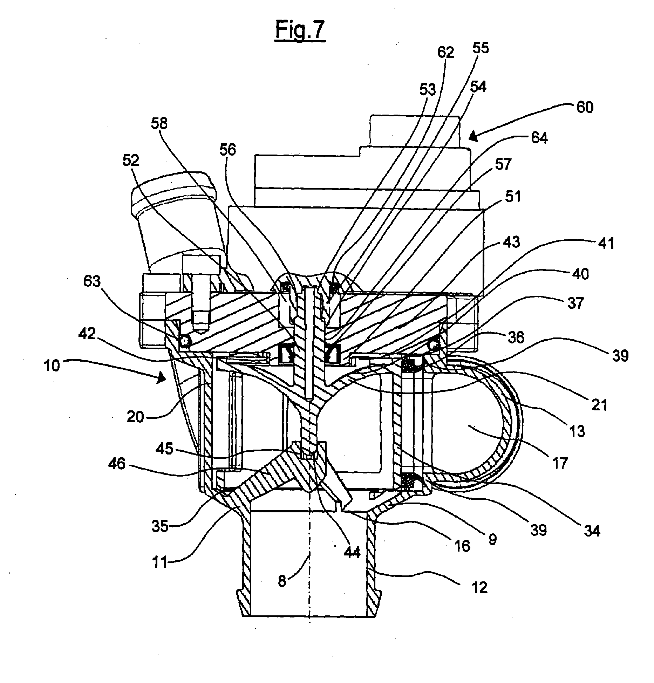

Wie z.B. aus Fig. 3, 4 und Fig. 7 ersichtlich ist, weist das Steuerelement 21 an seiner oberen Abschlusswandung 40 hochragende Anschläge 41 auf, die zur Schwenkwinkelbegrenzung an zugeordneten Anschlägen 42 des Gehäuses 11, z.B. des Deckels 43, anschlagen. Beim ersten Ausführungsbeispiel gemäß Fig. 1 bis 11 ist das Steuerelement 21 mittels eines zentralen, zum Einlass 35 weisenden Vorsprunges 44, der in eine Aufnahme 45 eines gehäuseseitigen Halters 46 eingreift, an diesem Ende radial und axial gelagert.

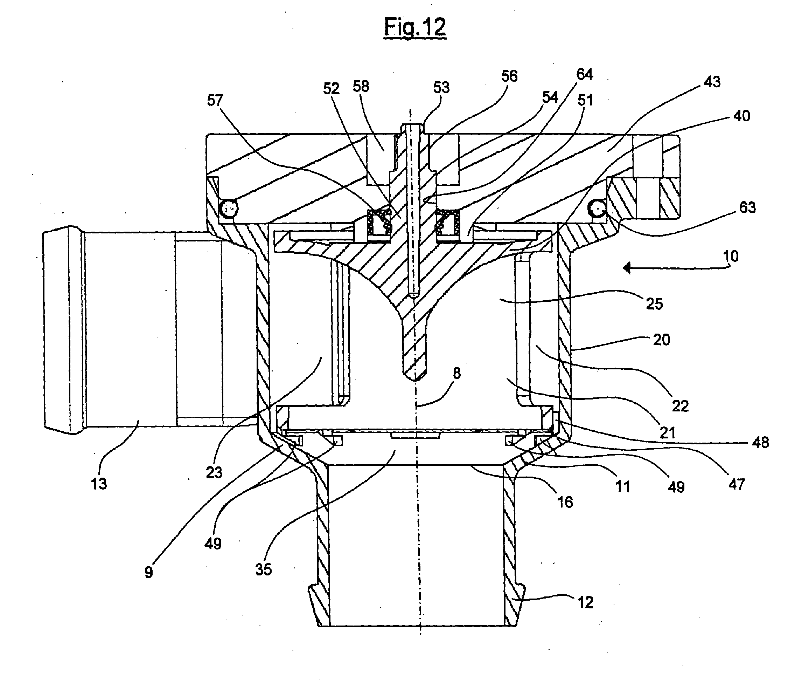

Bei dem in Fig. 12 gezeigten zweiten Ausführungsbeispiel ist statt der zentralen radialen und axialen Lagerung 44, 45 das Steuerelement 21 mit seinem einlassseitigen Rand 47 seiner Wandung 34 an umfangsseitigen Stegen 48 des Gehäuses 11 radial geführt und an in radialer Richtung vorspringenden und das Steuerelement 21 in Fig. 12 von unten stützenden Stegen 49 axial geführt.

In beiden Fällen ist das Steuerelement 21 ferner am oberen Endbereich, dem unteren Rand 47 gegenüberliegend, mittels eines axial vorstehenden Ringbundes 51, an dem das Steuerelement 21 mit der oberen Abschlusswandung 40 axial anstößt, axial gehalten. Der Ringbund 51 ist Bestandteil entweder des Deckels 43 oder dann, wenn der Deckel 43 einstückiger Bestandteil des Gehäuses 11 ist, Teil des Gehäuses 11 selbst.

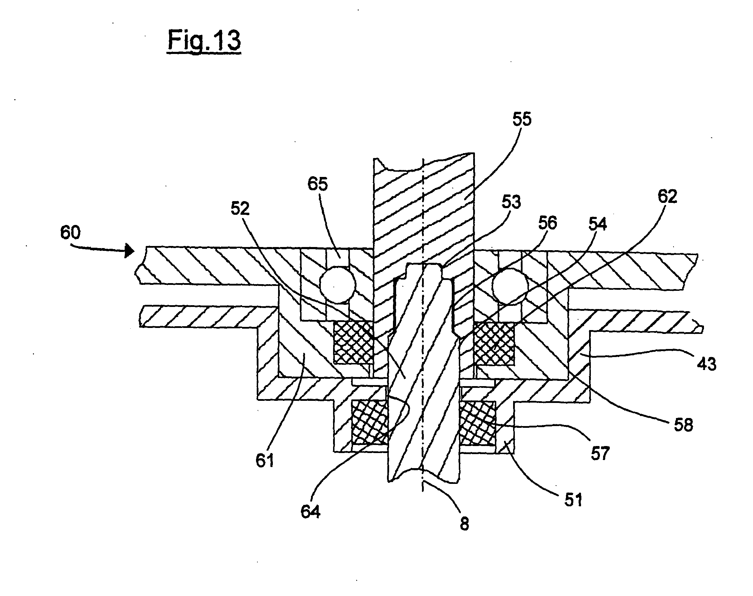

Das Steuerelement 21 weist eine damit einstückige Welle 52 auf, über die das Steuerelement 21 von einer aufgesetzten Antriebseinheit 60 drehangetrieben ist. Die Welle 52 verläuft koaxial zur Längsmittelachse 8 und steht über die obere Abschlusswandung 40 nach oben hin über, wobei sie den Deckel 43 im Bereich einer zentralen Öffnung 64 durchsetzt. Die Öffnung 64 kann zur radialen Lagerung des Steuerelements 21 über dessen Welle 52 dienen, oder sie ist im Durchmesser größer als die Welle 52 gestaltet, wie Fig. 13 zeigt. Die Welle 52 ist in dieser Weise durch den Deckel 43 hindurch nach außen geführt, wobei zwischen dem Ringbund 21 und der Welle 52 eine Dichtung 57 vorgesehen ist.

Die Welle 52 weist zwei in axialer Richtung beabstandete zylindrische Führungsabschnitte 53 und 54 auf, die einen unterschiedlichen Durchmesser haben. Axial zwischen den beiden Führungsabschnitten 53, 54 ist ein Mitnehmerabschnitt 56 vorgesehen, z.B. in Form eines Keilwellenabschnitts mit etwa achsparallelen Keilen. Die beiden zylindrischen Führungsabschnitte 53 und 54 dienen der radialen Lagerung des Steuerelements 21 mittels einer darauf aufgesteckten Antriebswelle 55 der Antriebseinheit 60. Diese Antriebswelle 55 ist als Hohlwelle ausgebildet und weist den beiden zylindrischen Führungsabschnitten 53 und 54 entsprechende zylindrische Innenflächen auf. Dem Mitnehmerabschnitt 56 ist bei der Antriebswelle 55 ein entsprechender innerer Mitnehmerabschnitt, z.B. Keilwellenabschnitt, zugeordnet, der mit dem Mitnehmerabschnitt 56 bei aufgesteckter Antriebswelle formschlüssig in Eingriff steht. Diese Verbindung und der formschlüssige Antriebseingriff werden dann hergestellt, wenn die Antriebseinheit 60 oben auf das Gehäuse 11, insbesondere dessen Deckel 43, aufgesetzt und daran fixiert wird. Der Deckel 43 enthält einen eingetieften Ringsitz 58, in den die aufgesetzte Antriebseinheit 60 z.B. mit einem Vorsprung 61 ihres Gehäuses und/oder mit der Antriebswelle 55 eingreift. Bei Bedarf kann die Antriebseinheit 60 mit diesem Vorsprung 61 im Ringsitz 58 zentriert sein. Beim gezeigten Ausführungsbeispiel in Fig. 1 bis 12 ragt die Antriebswelle 55 in den Ringsitz 58 hinein, wobei aufgrund geringeren Außendurchmessers die Antriebswelle 55 keine Anlage am Ringsitz 58 hat. Die Antriebseinheit 60 ist z.B. im Bereich der Antriebswelle 55 mittels einer Dichtung 62 abgedichtet. Bei dem in Fig. 13 gezeigten dritten Ausführungsbeispiel ist die Dichtung 62 in einem Ringraum zwischen der Antriebswelle 55 und dem Vorsprung 61 eingesetzt. Der Vorsprung 61 ist etwa topfförmig und nimmt oberhalb der Dichtung 62 ein Lager 65, z.B. Kugellager, auf, das der Lagerung der Antriebswelle 55 dient. Dadurch ist eine besonders gute radiale Lagerung der Welle 52 des Steuerelements 21 erreicht, da die Führungsabschnitte 53 und 54 der Welle 52, die mit entsprechenden innenzylindrischen Flächen der Antriebswelle 55 zur Lagerung zusammenwirken, praktisch auf axialer Höhe des Lagers 65 sind und dadurch dieser Kupplungsbereich zwischen Antriebswelle 55 und Welle 52 zuverlässig zentriert und gelagert ist. Der Vorsprung 61 des Gehäuses der Antriebseinrichtung 60 kann zylindrisch und passgenau in Bezug auf den Ringsitz 58 ausgebildet sein, so dass die Antriebseinheit 60 mit ihrem Gehäuse in Bezug auf den Deckel 43 mittels des Ringsitzes 58 zentriert ist. Bei entsprechender Tiefe des Vorsprunges 61 kann dadurch auch die axiale Beziehung zwischen dem Gehäuse der Antriebseinheit 60 und dem Deckel 43 vorgegeben sein.

Die Antriebseinheit 60 ist als Komplettbaustein ausgebildet, der unter Kupplung der Antriebswelle 55 mit der Welle 52 lösbar an das Gehäuse 11 angesetzt ist. Die Antriebseinheit 60 enthält einen elektrischen Antriebsmotor, z.B. einen Schrittmotor oder einen Gleichstrommotor, vorzugsweise mit nachgeschaltetem Getriebe.

Aus den Zeichnungen wird deutlich, dass das Gehäuse 11 je Ablauföffnung 17 bis 19 einen davon abgehenden, mit dem Gehäuse 11 einstückigen Stutzen 13 bis 15 aufweist. Zumindest ein Stutzen 13 verläuft in Bezug auf das Gehäuse etwa tangential. Von den anderen Stutzen 14, 15 verläuft zumindest ein Stutzen in Bezug auf das Gehäuse 11 zumindest annähernd parallel zur Gehäuseachse oder unter einem spitzen Winkel geneigt dazu, was besonders strömungsgünstig ist.

Die beschriebene Steuervorrichtung hat vielfältige Vorteile. Aufgrund der langlochartigen Fenster 28 bis 30 in der Umfangswand 20 des Gehäuses ergibt sich eine besonders kompakte Bauform. Daraus resultiert ein geringerer erforderlicher Bauraum für den Einbau der Steuervorrichtung 10, was bei den beengten Platzverhältnissen z.B. im Bereich einer Brennkraftmaschine für Fahrzeuge von besonders großer Bedeutung ist. Aufgrund der beschriebenen Form der Fenster 28 bis 30 sowie der Öffnungen 22 bis 24 im Steuerelement 21 ergibt sich in den jeweiligen Öffnungsstellungen aufgrund der großen Öffnungsquerschnitte eine große Durchsatzmenge des hindurch fließenden Mediums, insbesondere Kühlmittels. Das Steuerelement 21 benötigt zum Durchfahren der einzelnen Schaltstellungen von der ersten Schaltstellung bis zur vierten Schaltstellung und zurück relativ kleine Schwenkwinkel und damit Schaltwege. Es ist eine schnelle und präzise Betätigung des Steuerelements 21 möglich. Die Steuervorrichtung 10 besteht aus nur wenigen Bauelementen, nämlich dem Gehäuse 11, dem Steuerelement 21 und der aufgesetzten Antriebseinheit 60. Aufgrund der beschriebenen radialen und axialen Führung des Steuerelements 21 sowie Lagerung dieses ist der Lageraufwand dafür reduziert. Auch ist der Aufwand zur Montage der Bestandteile der Steuervorrichtung 10 sehr gering. Diese lässt sich schnell zusammensetzen und im Bedarfsfall, z.B. zu Reinigungszwecken, auch wieder schnell demontieren. Bei Bedarf ist auch in einfacher Weise ein Austausch z.B. des Steuerelements 21 möglich. Aufgrund der Gestaltung des Gehäuses 11 und/oder des Steuerelements 21 in Kunststoff ist jedes Bauteil in kostengünstiger Weise mit allen konstruktiven Elementen durch Spritzen und damit besonders kostengünstig herstellbar.

## Patentansprüche

1. Steuervorrichtung (10) für den Kühlmittelfluss im Kühlkreislauf einer Brennkraftmaschine, insbesondere für Fahrzeuge, mit wenigstens zwei Kühlmittelkreisläufen, mit folgenden Merkmale:
1.1 einem Gehäuse (11), in dem ein Steuerelement (21) drehbar angeordnet ist,
1.2 zumindest einer Zulauföffnung (16) zu dem Gehäuse (11),
1.3 zumindest zwei Ablauföffnungen (17 bis 19) in einer Umfangswand (20) des Gehäuses (11),
1.4 die mindestens zwei Ablauföffnungen (17 bis 19) liegen in einer gemeinsamen Ebene,
1.5 das Steuerelement (21) dient zur Steuerung der Abströmung durch die mindestens zwei Ablauföffnungen (17 bis 19) und ist mit einer mit der Anzahl der Ablauföffnungen (17 bis 19) korrespondierenden Anzahl von an seinem Umfang angeordneten, miteinander verbundenen Öffnungen (22 bis 24) versehen, wobei das Steuerelement (21) an seinem Umfang jeweils zwischen den Öffnungen (22 bis 24) liegende Sperrwände (25 bis 27) aufweist mit einer Umfangswinkelanordnung und Umfangswinkelbreite derart, dass hierdurch in einer ersten Schaltstellung des Steuerelements (21) alle Ablauföffnungen (17 bis 19) komplett abgesperrt werden, in einer zweiten Schaltstellung nur eine (19) der Ablauföffnungen (17 bis 19) geöffnet ist, in einer dritten Schaltstellung wenigstens zwei Ablauföffnungen (18, 19) wenigstens teilweise geöffnet sind und in einer vierten Schaltstellung alle Ablauföffnungen (17 bis 19) geöffnet sind,
**dadurch gekennzeichnet,**
**dass** die Ablauföffnungen (17 bis 19) in der Umfangswand (20) des Gehäuses (11) als langlochartige Fenster (28 bis 30) mit axialer Längserstreckung ausgebildet sind, dass diese Fenster (28 bis 30) von langlochartig geformten Dichtkörpern (31 bis 33) mit den Fenstern (28 bis 30) entsprechender Kontur gesäumt sind, die an der Wandung (34) des Steuerelements (21) anliegen, und dass die Öffnungen (22 bis 24) im Steuerelement (21) in axialer Richtung den Ablauföffnungen (17 bis 19) und den Dichtkörpern (31 bis 33) etwa entsprechend bemessen sind und in Umfangsrichtung zumindest einer Ablauföffnung (17) etwa entsprechend bemessen sind.

2. Steuervorrichtung nach Anspruch 1,
**dadurch gekennzeichnet,**
**dass** in der Umfangswand (20) des Gehäuses (11) drei vorzugsweise in etwa gleichen Umfangswinkelabständen voneinander angeordnete Ablauföffnungen (17 bis 19) und in der Wandung (34) des Steuerelements (21) drei zugeordnete Öffnungen (22 bis 24) vorgesehen sind.

3. Steuervorrichtung nach einem der Ansprüche 1 oder 2,
**dadurch gekennzeichnet,**
**dass** eine Ablauföffnung (17) in der Umfangswand (20) des Gehäuses (11) eine größere Breite aufweist als die beiden anderen Ablauföffnungen (18, 19), die in Umfangsrichtung jeweils etwa gleiche Breite haben.

4. Steuervorrichtung nach einem der Ansprüche 1 bis 3,
**dadurch gekennzeichnet,**
**dass** das Gehäuse (11) vorzugsweise etwa zylindrisch ist und eine untere koaxiale Zulauföffnung (16) mit einem vorzugsweise abstrebenden zentralen Rohrstutzen (12) aufweist, und vorzugsweise, dass das Steuerelement (21) als etwa umgekehrt topfförmiger zylindrischer Körper ausgebildet ist, der eine etwa zylindrische Wandung (34), ein obere Abschlusswandung (40) und ein axial offenes Ende mit einem Einlass (35) am der Abschlusswandung (40) gegenüberliegenden Ende für das zulaufende Medium aufweist.

5. Steuervorrichtung nach einem der Ansprüche 1 bis 4,
**dadurch gekennzeichnet,**
**dass** die Fenster (28 bis 30) in der Umfangswand (20) des Gehäuses (11) und die Öffnungen (22 bis 24) im Steuerelement (21) sowie die Dichtkörper (31 bis 33) jeweils etwa rechteckförmig ausgebildet sind.

6. Steuervorrichtung nach einem der Ansprüche 1 bis 5,
**dadurch gekennzeichnet,**
**dass** die Dichtkörper (31 bis 33) aus Kunststoff, insbesondere einem Elastomer, bestehen und vorzugsweise einen umlaufenden metallischen Versteifungsrahmen (36) enthalten, der vorzugsweise zumindest im Bereich der längeren Ränder der Dichtkörper (31 bis 33) über diese übersteht und beidseitige metallische Randstege (37) bildet.

7. Steuervorrichtung nach Anspruch 6,
**dadurch gekennzeichnet,**
**dass** die Randstege (37) in zugeordnete Nuten (38) des Gehäuses (11) eingreifen, in die die Dichtkörper (31 bis 33) mit den Randstegen (37) eingeschoben sind.

8. Steuervorrichtung nach einem der Ansprüche 1 bis 7,
**dadurch gekennzeichnet,**
**dass** die Dichtkörper (31 bis 33) auf der Seite, die der an der Wandung (34) des Steuerelements (21) anliegenden Dichtfläche gegenüberliegt, elastische Lippen (39), die überstehen und unter Vorspannung der Dichtkörper (31 bis 33) in Dichtrichtung an Gehäuseflächen anliegen, aufweisen und vorzugsweise unter der Wirkung des Druckes des über die Zulauföffnung (16) zugeführten Kühlmittels an die Wandung (34) des Steuerelements (21) radial angepresst werden.

9. Steuervorrichtung nach einem der Ansprüche 4 bis 8,
**dadurch gekennzeichnet,**
**dass** das Steuerelement (21) an seiner oberen Abschlusswandung (40) abstehende Anschläge (41) aufweist, die zur Schwenkwinkelbegrenzung an zugeordneten Anschlägen (42) des Gehäuses (11), z. B. eines Deckels (43) dieses, anschlagen.

10. Steuervorrichtung nach einem der Ansprüche 4 bis 9,
**dadurch gekennzeichnet,**
**dass** das Steuerelement (21) mittels eines zentralen, zum Einlass (35) weisenden Vorsprunges (44), der in eine Aufnahme (45) eines gehäuseseitigen Halters (46) eingreift, an diesem Ende radial und axial gelagert ist oder dass das Steuerelement (21) mit seinem einlassseitigen Rand (47) seiner Wandung (34) an umfangsseitigen Stegen (48) des Gehäuses (11) radial geführt und an radial vorspringenden Stegen (49) des Gehäuses (11) axial geführt ist.

11. Steuervorrichtung nach einem der Ansprüche 4 bis 10,
**dadurch gekennzeichnet,**
**dass** das Steuerelement (21) am oberen Endbereich mittels eines deckelseitigen oder gehäuseseitigen, axial vorstehenden Ringbundes (51), an dem das Steuerelement (21)mit der oberen Abschlusswand (40) axial anstößt, axial gehalten ist.

12. Steuervorrichtung nach einem der Ansprüche 1 bis 11,
**dadurch gekennzeichnet,**
**dass** das Steuerelement (21) eine damit einstückige, über die obere Abschlusswand (40) überstehende Welle (52) aufweist, über-die das Steuerelement (21) von einer aufgesetzten Antriebseinheit (60) drehangetrieben ist, und vorzugsweise, dass die Welle (52) zwei in axialer Richtung beabstandete zylindrische Führungsabschnitte (53, 54) für eine aufgesteckte Antriebswelle (55) der Antriebseinheit (60) aufweist, und vorzugsweise, dass die Welle (52) axial zwischen den Führungsabschnitten (53, 54) einen Mitnehmerabschnitt (56), z. B. einen Keilwellenabschnitt mit etwa achsparallelen Keilen, aufweist, an dem zum Drehantrieb die aufgesteckte Antriebswelle (55) der Antriebseinheit (60) formschlüssig angreift.

13. Steuervorrichtung nach einem der Ansprüche 1 bis 12,
**dadurch gekennzeichnet,**
**dass** das Gehäuse (11) am der axialen Zulauföffnung (16) gegenüberliegenden Ende einen separaten oder mit dem Gehäuse (11) einstückigen Deckel (43) aufweist, und vorzugsweise, dass die Welle (52) durch den Deckel (43) hindurch nach außen ragt und mittels eines Dichtungselements (57) abgedichtet ist, und vorzugsweise, dass der Deckel (43) einen eingetieften Ringsitz (58) enthält, in den die aufgesetzte Antriebseinheit (60) mit einem Vorsprung (61) ihres Gehäuses eingreift und zentriert ist

14. Steuervorrichtung nach einem der Ansprüche 12 oder 13,
**dadurch gekennzeichnet,**
**dass** die Antriebseinheit (60) als Komplettbaustein ausgebildet ist, der unter Kupplung der Antriebswelle (55) mit der Welle (52) lösbar an das Gehäuse (11) ansetzbar ist.

15. Steuervorrichtung nach einem der Ansprüche 1 bis 14,
**dadurch gekennzeichnet,**
**dass** das Gehäuse (11) je Ablauföffnung (17 bis 19) einen davon abgehenden, mit dem Gehäuse (11) einstückigen Stutzen (13 bis 15) aufweist.

16. Steuervorrichtung nach Anspruch 15,
**dadurch gekennzeichnet,**
**dass** zumindest ein Stutzen (13) in Bezug auf das Gehäuse (11) etwa tangential verläuft oder zumindest ein Stutzen (14, 15) in Bezug auf das Gehäuse (11) zumindest annähernd parallel zur Längsmittelachse des Gehäuses (11) oder unter einem spitzen Winkel geneigt dazu, gegensinnig zum Zulauf, verläuft.
